# EUROPÄISCHE PATENTSCHRIFT

(11) **EP 2 077 212 B1**
(45) Veröffentlichungstag und Bekanntmachung des Hinweises auf die Patenterteilung: **06.07.2011**
(21) Anmeldenummer: 08018533.3
(22) Anmeldetag: 23.10.2008
(51) Int. Cl.: B60T 8/00, B60K 31/00, B60W 30/08

(54) **Fahrerassistenzsystem**
Driver assist system
Système d'assistance du conducteur

(30) Priorität: 04.01.2008 DE 102008003194
(43) Veröffentlichungstag der Anmeldung: 08.07.2009
(73) Patentinhaber: WABCO GmbH, 30432 Hannover (DE)
(72) Erfinder: Breuer, Karsten, 31867 Lauenau (DE); Dieckmann, Thomas, 30982 Pattensen (DE); Hoffmann, Guido, 30453 Hannover (DE)

(56) Entgegenhaltungen:
- EP-A- 0 928 714
- EP-A- 0 949 108
- EP-A- 1 065 089
- EP-A- 1 112 888
- US-A- 5 332 057
- US-B1- 6 259 992

## Beschreibung

Die Erfindung betrifft ein Fahrerassistenzsystem für einen Kraftwagen, mit einer Fahrgeschwindigkeits-Erfassungsvorrichtung zum Erfassen einer Fahrgeschwindigkeit des Kraftwagens, (b) einer Vorderfahrzeug-Erfassungsvorrichtung zum Erfassen eines vor dem Kraftwagen fahrenden Vorderfahrzeugs, (c) einer Vorderfahrzeuggeschwindigkeits-Ermittlungsvorrichtung zum Ermitteln einer Vorderfahrzeuggeschwindigkeit des Vorderfahrzeugs, (d) mindestens einen Fahrdatensensor zum Erfassen von einem Fahrzustand des Kraftwagens charakterisierenden Fahrdaten und (e) einer elektrische Steuerung, die eingerichtet ist, um beim Vorliegen von vorbestimmten Bremsauslöse-Fahrdaten eine autonome Bremsung des Kraftwagens auszulösen und beim Vorliegen von vorbestimmten Bremsabbruch-Fahrdaten die autonome Bremsung des Kraftwagens zu beenden.

Derartige Fahrerassistenzsysteme sind bekannt und dienen dazu, durch eine autonome Bremsung eines Kraftwagens, die auch eine Teilbremsung sein kann, kurz vor einer erwarteten Kollision des Kraftwagens mit dem Vorderfahrzeug die Unfallschwere zu vermindern oder den Unfall ganz zu vermeiden. Um die notwendigen Signale zum Auslösen der autonomen Bremsung zu generieren, ist eine Vorderfahrzeug-Erfassungsvorrichtung vorhanden.

Die US6259992B1 beschreibt ein Fahrzeug-Fahrtsicherheits-Regelungssystem mit einem Hinderniserfassungsmittel zum Erfassen eines Hindernisses, welches auf einer Bewegungsbahn des Fahrzeugs vor dem Fahrzeug liegt, mit einem Fahrzeuggeschwindigkeitserfassungsmittel, mit einem Abstandsbestimmungsmittel zum Bestimmen des Abstands des Hindernisses zum Fahrzeug auf Grundlage eines Erfassungsergebnisses des Hinderniserfassungsmittels, mit einem Relativgeschwindigkeitserfassungsmittel zum Bestimmen der Geschwindigkeit des Hindernisses relativ zum Fahrzeug auf Grundlage eines Erfassungsergebnisses des Hinderniserfassungsmittel, mit einem Berührungswahrscheinlichkeitsbestimmungsmittel zum Bestimmen der Wahrscheinlichkeit einer Berührung mit dem Hindernis auf Grundlage des bestimmten Abstands und der Relativgeschwindigkeit und mit einem Bremssystembetriebsmittel, um das Fahrzeug mit einer Verlangsamung auf Grundlage der bestimmten Wahrscheinlichkeit einer Berührung zu bremsen. Falls während des Betriebs des Bremssystems das Hindernis verloren wurde, wird entweder die Verlangsamung durch das Bremssystembetriebsmittel um einen Betrag vergrößert, wenn die Wahrscheinlichkeit einer Berührung als hoch bestimmt wird oder andernfalls, die Verlangsamung um einen Betrag verringert, wenn die Wahrscheinlichkeit einer Berührung als klein bestimmt wird.

Nachteilig an bekannten Fahrerassistenzsystemen ist, dass die autonome Bremsung abgebrochen wird, wenn die Vorderfahrzeug-Erfassungsvorrichtung kein Vorderfahrzeug mehr erfasst. Es hat sich gezeigt, dass derartige Fahrerassistenzsysteme häufig zu früh die autonome Bremsung beenden, so dass die Kollisionsgefahr und die potentielle Intensität des Unfalls zunehmen.

Der Erfindung liegt die Aufgabe zugrunde, Nachteile im Stand der Technik zu überwinden. Die Erfindung löst das Problem durch ein gattungsgemäßes Fahrerassistenzsystem, bei dem die elektrische Steuerung eingerichtet ist zum Durchführen eines Verfahrens mit den Schritten (i) eines Ermittelns, ob die Vorderfahrzeug-Erfassungsvorrichtung Signale abgibt und kein Vorderfahrzeug erfasst, und (ii) verneinendenfalls eines Beendens der autonomen Bremsung, wenn die Fahrgeschwindigkeit kleiner als die zuletzt ermittelte Vorderfahrzeug-geschwindigkeit ist.

Vorteilhaft hieran ist, dass ein Schlingern, Gieren und/oder Nicken nicht zu einem Beenden der autonomen Bremsung führt. Es hat sich nämlich gezeigt, dass der Kraftwagen bei einer autonomen Bremsung häufig so stark schlingert, giert und/oder nickt, dass die Vorderfahrzeug-Erfassungsvorrichtung ein vorhandenes Vorderfahrzeug nicht mehr erfassen kann. In einer solchen, bereits kritischen Situation ist es vorteilhaft, so lange weiter zu bremsen, bis die Fahrgeschwindigkeit des Kraftwagens kleiner ist als die zuletzt ermittelte Vorderfahrzeuggeschwindigkeit. Auf diese Weise verliert der Kraftwagen einerseits kinetische Energie, so dass ein möglicher Aufprall auf das Vorderfahrzeug weniger schwer ist.

Andererseits erfolgt ein Abbruch der autonomen Bremsung, bevor der Kraftwagen steht. Wird das Verfahren in kurzen Zeitintervallen von beispielsweise unter einer Zehntelsekunde beständig wiederholt, so wird die Bremsung unmittelbar nach dem Unterschreiten der zuletzt ermittelten Vorderfahrzeuggeschwindigkeit abgebrochen. So wird vermieden, dass der Kraftwagen auch dann bis in den Stand abgebremst wird, wenn das Vorderfahrzeug nur kurzfristig stark gebremst hat und danach beispielsweise die Spur wechselt, seine Bremsung beendet oder beschleunigt.

Vorteilhaft ist zudem, dass die Erfindung sehr leicht in bestehende Fahrerassistenzsysteme implementiert werden kann. Dazu ist lediglich eine Software-Änderung notwendig.

Im Rahmen der vorliegenden Beschreibung wird unter einer Fahrgeschwindigkeits-Erfassungsvorrichtung insbesondere ein Tachometer oder Tachograph verstanden. Unter einer Vorderfahrzeug-Erfassungsvorrichtung wird insbesondere ein jeglicher Sensor verstanden, der ausgebildet und dafür vorgesehen ist, um ein relevantes Vorderfahrzeug des Kraftwagens zu detektieren, das heißt als ein Vorderfahrzeug zu identifizieren. Ein relevantes Vorderfahrzeug ist ein Vorderfahrzeug, das sich im Bewegungspfad des Kraftwagens befindet. Die Vorderfahrzeug-Erfassungsvorrichtung kann zudem Daten erfassen, aus denen die Relativgeschwindigkeit zum Kraftwagen bestimmt werden kann. Beispielsweise kann die Vorderfahrzeug-Erfassungsvorrichtung ausgebildet sein, um einen Abstand des Kraftwagens zum Vorderfahrzeug in regelmäßigen Zeitabständen zu ermitteln.

Die Vorderfahrzeuggeschwindigkeits-Ermittlungsvorrichtung ist insbesondere ausgebildet, um von der Fahrgeschwindigkeits-Erfassungsvorrichtung und der Vorderfahrzeug-Erfassungsvorrichtung jeweilige elektrische Signale zu empfangen und daraus die Vorderfahrzeuggeschwindigkeit zu berechnen. So ergibt sich die Vorderfahrzeuggeschwindigkeit als Vektorsumme aus der Fahrgeschwindigkeit und eine Relativgeschwindigkeit zwischen dem Kraftwagen und dem Vorderfahrzeug.

Unter dem Merkmal, dass die elektrische Steuerung eingerichtet ist zum Ermitteln, ob die Vorderfahrzeug-Erfassungsvorrichtung Signale abgibt, ist zu verstehen, dass die elektrische Steuerung erfasst, ob die Vorderfahrzeug-Erfassungsvorrichtung ordnungsgemäß funktioniert und nicht etwa funktionsuntüchtig ist. In anderen Worten ist dafür, dass die Vorderfahrzeug-Erfassungsvorrichtung Signale abgibt, nur notwendig, dass die Vorderfahrzeug-Erfassungsvorrichtung im Prinzip in der Lage ist, das Vorderfahrzeug zu detektieren, auch wenn beispielsweise durch ein Schlingern, Gieren und/oder Nicken des Kraftwagens das Vorderfahrzeug nicht erfasst werden kann. Das Merkmal (i) könnte damit auch lauten, dass ermittelt wird, ob bei der Vorderfahrzeug-Erfassungsvorrichtung ein Zielverlust vorliegt. Das heißt, dass die Vorderfahrzeug-Erfassungsvorrichtung zwar ordnungsgemäß funktioniert, aufgrund des Bewegungszustands oder der Verkehrssituation jedoch nicht in der Lage ist, sein etwaig vorhandenes Ziel in Form eines Vorderfahrzeugs korrekt zu erkennen.

Unter dem Merkmal, dass die autonome Bremsung verneinendenfalls beendet wird, ist zu verstehen, dass die autonome Bremsung dann beendet wird, wenn die Vorderfahrzeug-Erfassungsvorrichtung zwar Signale abgibt und damit funktionstüchtig ist, aber kein Vorderfahrzeug erfasst. Eine Ursache hierfür kann, wie oben bereits dargelegt, ein Schlingern, Gieren und/oder Nicken des Kraftwagens sein. Die elektrische Steuerung überprüft in kurzen Zeitabständen, die beispielsweise weniger als eine Zehntelsekunde betragen, die Fahrgeschwindigkeit. Sobald die Fahrgeschwindigkeit kleiner ist als die zuletzt ermittelte Vorderfahrzeuggeschwindigkeit, bricht die elektrische Steuerung die autonome Bremsung ab, sofern der Abbruch nicht unterdrückt ist, wie weiter unten beschrieben wird.

In einer bevorzugten Ausführungsform ist die elektrische Steuerung eingerichtet zum Durchführen eines Verfahrens mit den zusätzlichen Schritten eines Ermittelns während der autonomen Bremsung, ob die Vorderfahrzeug-Erfassungsvorrichtung Signale abgibt und verneinendenfalls eines Unterdrückens des Beendens der autonomen Bremsung, bis der Kraftwagen steht. In anderen Worten wird, nachdem die autonome Bremsung ausgelöst worden ist, erfasst, ob die Vorderfahrzeug-Erfassungsvorrichtung funktionsuntüchtig ist. Wenn die Funktionsuntüchtigkeit festgestellt wird, wird der Kraftwagen autonom bis in den Stand abgebremst. Darunter, dass die Vorderfahrzeug-Erfassungsvorrichtung funktionsuntüchtig ist, ist zu verstehen, dass sie auch unter optimalen Bedingungen nicht in der Lage wäre, das Vorderfahrzeug zu erfassen. Beispielsweise kann das dann geschehen, wenn der Kraftwagen bereits mit dem Vorderfahrzeug zusammengestoßen ist und dabei die Vorderfahrzeug-Erfassungsvorrichtung zerstört wurde.

Bevorzugt ist die Vorderfahrzeuggeschwindigkeits-Ermittlungsvorrichtung eingerichtet, um von der Fahrgeschwindigkeits-Erfassungsvorrichtung Fahrgeschwindigkeitsdaten zu empfangen, von der Vorderfahrzeug-Erfassungsvorrichtung zeitabhängige Abstandsdaten zu empfangen und aus den zeitabhängigen Abstandsdaten und den Fahrgeschwindigkeitsdaten die Vorderfahrzeuggeschwindigkeit zu errechnen. Die Vorderfahrzeuggeschwindigkeits-Ermittlungsvorrichtung kann beispielsweise Teil der elektrischen Steuerung sein. Dazu ist es nicht notwendig, dass die Vorderfahrzeuggeschwindigkeits-Ermittlungsvorrichtung ein abgrenzbarer Teil der elektrischen Steuerung ist, die angegebenen Verfahrensschritte können auch von der elektrischen Steuerung zusammen mit anderen Verfahrensschritten abgearbeitet werden. Alternativ wird die Relativgeschwindigkeit mittels eines Radar-Sensors über den Doppler-Effekt erfasst.

In einer bevorzugten Ausführungsform umfasst die Vorderfahrzeug-Erfassungs-vorrichtung einen mehrstrahligen Lasersensor. Alternativ oder additiv umfasst die Vorderfahrzeug-Erfassungsvorrichtung eine Videokamera. Sind sowohl Videokamera als auch Lasersensor vorhanden, wird vorteilhafterweise eine Redundanz erreicht.

Es kann gemäß einer bevorzugten Ausführungsform vorgesehen sein, dass die elektrische Steuerung eingerichtet ist zum Ermitteln einer Vorderfahrzeugverzögerung, mit der das Vorderfahrzeug abbremst. In diesem Fall kann als die zuletzt ermittelte Vorderfahrzeuggeschwindigkeit auch diejenige extrapolierte Vorderfahrzeuggeschwindigkeit verwendet werden, die unter der Annahme einer konstanten Verzögerung berechnet wird. Dazu wird der Zeitpunkt ermittelt, zu dem die Vorderfahrzeuggeschwindigkeit zuletzt korrekt ermittelt werden konnte. Es wird zudem der aktuelle Zeitpunkt ermittelt und die Differenz zum erstgenannten Zeitpunkt bestimmt. Es handelt sich dabei um die Zeitspanne, die vergangen ist, seitdem zum letzten Mal die Vorderfahrzeuggeschwindigkeit ermittelt werden konnte. Aus dieser Zeit und der zuletzt ermittelten Vorderfahrzeugverzögerung wird dann die Vorderfahrzeuggeschwindigkeit neu berechnet.

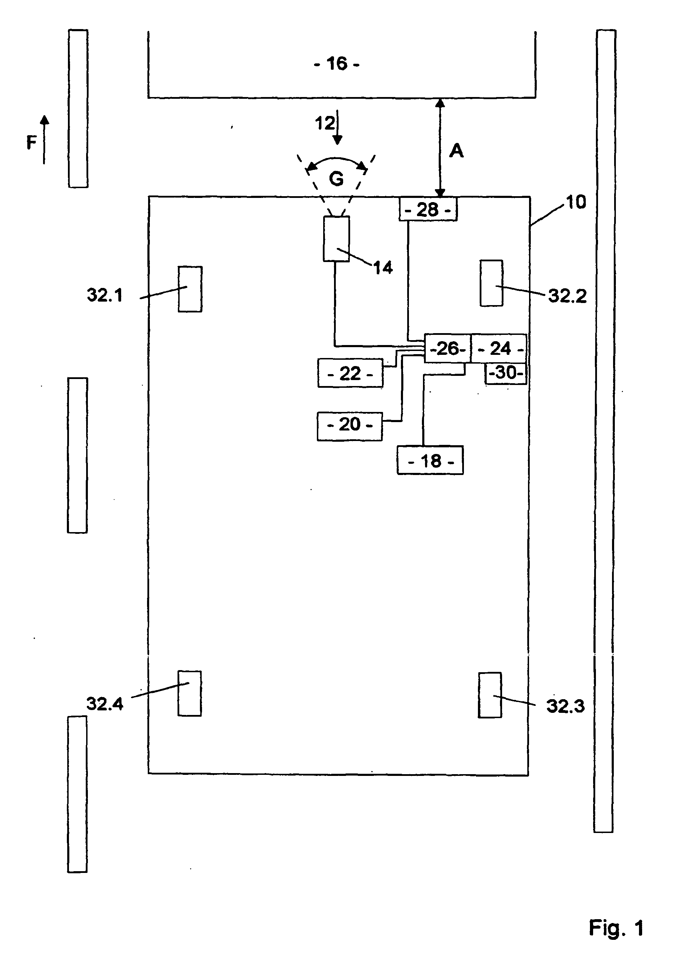

Im Folgenden wird eine Ausführungsform der Erfindung anhand der beigefügten Zeichnung näher erläutert. Dabei zeigt
- Figur 1: eine schematische Ansicht eines erfindungsgemäßen Kraftwagens mit einem erfindungsgemäßen Fahrerassistenzsystem.

Figur 1 zeigt einen Kraftwagen 10, der eine Vorderseite 12 besitzt und sich auf einer schematisch eingezeichneten Straße in eine Fahrtrichtung F fortbewegt. Mit einer Vorderfahrzeug-Erfassungsvorrichtung in Form einer Videokamera 14, die einen Gesichtsbereich G hat, kann ein vor dem Kraftwagen 10 fahrendes Vorderfahrzeug 16 erfasst werden. Die Videokamera 14 ist eingerichtet, um einerseits das Vorderfahrzeug 16 zu erfassen, um also eine Information darüber zu liefern, ob ein Vorderfahrzeug überhaupt vorhanden ist und andererseits einen Abstand A zwischen der Vorderseite 12 des Kraftwagens 10 und einer Hinterseite des Vorderfahrzeugs 16 zu ermitteln.

Der Kraftwagen 10 umfasst zudem eine Fahrgeschwindigkeits-Erfassungsvorrichtung 18 in Form eines Tachometers. Das Tachometer 18 stellt eine Fahrdaten-Erfassungsvorrichtung dar, die Fahrdaten in Form einer Fahrgeschwindigkeit v_{F} des Kraftwagens 10 erfasst.

Der Kraftwagen 10 umfasst zudem einen Gierratensensor 20 und einen Verzögerungssensor 22, der beispielsweise Teil eines Airbag-Systems sein kann. Der Gierratensensor 20 und der Verzögerungssensor 22 sind ebenfalls Fahrdatensensoren und erfassen Fahrdaten in Form einer Gierrate bzw. eine Verzögerung oder Beschleunigung.

Die Fahrdatensensoren 18, 20, 22 sind über elektrische Leitungen mit einer elektrischen Steuerung 24 verbunden. Die elektrische Steuerung 24 umfasst eine Vorderfahrzeuggeschwindigkeits-Ermittlungsvorrichtung 26, die über elektrische Kabel mit der Videokamera 14 und einem Lasersensor 28 in Form eines mehrstrahligen Lasersensor verbunden ist. Für das Funktionieren des Fahrerassistenzsystems ist der Lasersensor 28 wichtiger als die Videokamera 28. Die Videokamera 28 ist entbehrlich.

Die Vorderfahrzeuggeschwindigkeits-Ermittlungsvorrichtung 26 erfasst in einem zeitlichen Abstand von beispielsweise 100 ms Messdaten von der Videokamera 14 und/oder dem Lasersensor 28 und errechnet daraus den Abstand A zum Vorderfahrzeug 16. Aus Änderungen im Abstand A errechnet die sie zudem die Relativgeschwindigkeit Vᵣₑₗₐₜᵢᵥ zwischen dem Kraftwagen 10 und dem Vorderfahrzeug 16. Die Vorderfahrzeuggeschwindigkeit v_{vf} wird von der elektrischen Steuerung 24 dadurch ermittelt, dass die Fahrgeschwindigkeit v_{K} vektoriell zu der Relativgeschwindigkeit Vᵣₑₗₐₜᵢᵥ hinzuaddiert wird. Alternativ ist die Vorderfahrzeuggeschwindigkeits-Ermittlungsvorrichtung 26 ein Radar-Doppler-Sensor, mit dem die Relativgeschwindigkeit vᵣₑₗₐₜᵢᵥ direkt über den Doppler-Effekt bestimmt wird.

Erfasst die elektrische Steuerung 24 Fahrdaten von einem der Fahrdatensensoren in Form der Fahrgeschwindigkeits-Erfassungsvorrichtung 18, des Gierratensensors 20, des Verzögerungssensors 22, der Videokamera 14 oder des Lasersensors 28, die vorbestimmten Bremsauslöse-Fahrdaten entsprechen, so löst sie eine autonome Bremsung des Kraftwagens 10 aus. Die vorbestimmten Bremsauslöse-Fahrdaten sind in einem digitalen Speicher 30 der elektrischen Steuerung 24 abgelegt. Eine autonome Bremsung wird dadurch ausgelöst, dass die elektrische Steuerung 24 Betriebsbremsen 32.1, 32.2, 32.3, 32.4 so ansteuert, dass diese unabhängig von Eingaben eines nicht eingezeichneten Bedieners den Kraftwagen 10 abbremst. Es können auch mehr oder weniger Betriebsbremsen vorhanden sein, beispielsweise sechs.

Während der autonomen Bremsung überwacht die elektrische Steuerung 24 stets die Fahrdaten von den Fahrdatensensoren 14, 18, 20, 22, 28, vergleicht diese mit im digitalen Speicher 30 abgelegten Bremsabbruch-Fahrdaten und bricht die autonome Bremsung ab, wenn die Fahrdaten den Bremsabbruch-Fahrdaten entsprechen.

Beim Betrieb des Kraftwagens 10 erfasst die elektrische Steuerung 24 zu regelmäßig aufeinander folgenden Zeitpunkten t₁, t₂, ... die Vorderfahrzeug-Geschwindigkeit V_{vf}(t) und legt diese in dem digitalen Speicher 30 ab. Ist eine autonome Bremsung ausgelöst, so ermittelt die elektrische Steuerung 24, ob die Vorderfahrzeug-Erfassungsvorrichtung in Form der Videokamera 14 oder die Vorderfahrzeug-Erfassungsvorrichtung in Form des Lasersensors 28 Signale abgibt, die ein Funktionieren der Systeme anzeigen. Ermittelt die elektrische Steuerung 24 zu einem Zeitpunkt tₙ, dass die Videokamera 14 und der Lasersensor 28 zwar funktionstüchtig, also intakt sind, aber kein Vorderfahrzeug 16 erfassen, so liest sie aus dem digitalen Speicher 30 die zuletzt abgespeicherte Vorderfahrzeug-Geschwindigkeit v_{vf}(tₙ₋₁) aus und beendet die autonome Bremsung, wenn die Fahrgeschwindigkeit v_{K} kleiner ist als die zuletzt gemessene Vorderfahrzeug-Geschwindigkeit v_{Vf}(tₙ₋₁).

Erfasst die elektrische Steuerung 24 nach Auslösen der autonomen Bremsung keinerlei Signale von den Vorderfahrzeug-Erfassungs-Vorrichtung, nämlich der Videokamera 14 und dem Lasersensor 28, so ist darauf zu schließen, dass zumindest der Lasersensor zerstört ist. In diesem Fall unterdrückt die elektrische Steuerung das Beenden der autonomen Bremsung, bis der Kraftwagen 10 steht. In anderen Worten wird die autonome Bremsung so lange durchgeführt, bis der Kraftwagen steht. Es ist danach möglich, die Betriebsbremsen 32 weiter in einer Bremsstellung zu halten. Alternativ ist es möglich, die Betriebsbremsen zu lösen.

## Patentansprüche

1. Fahrerassistenzsystem für einen Kraftwagen, mit
(a) einer Fahrgeschwindigkeits-Erfassungsvorrichtung (18) zum Erfassen von Fahrdaten in Form einer Fahrgeschwindigkeit des (v_{F}) Kraftwagens,
(b) einer Vorderfahrzeug-Erfassungsvorrichtung (14, 28) zum Erfassen von Fahrdaten in Form eines Abstands (A) zu einem vor dem Kraftwagen (10) fahrenden Vorderfahrzeugs (16),
(c) einer Vordertahrzeuggeschwindigkeits-Ermittlungsvorrichtung (26) zum Ermitteln einer Vorderfahrzeuggeschwindigkeit (v_{vf}) des Vorderfahrzeugs (16) und
(d) einer elektrischen Steuerung (24), die eingerichtet ist, um
- beim Vorliegen von vorbestimmten Bremsauslöse-Fahrdaten eine autonome Bremsung des Kraftwagens (10) auszulösen und
- beim Vorliegen von vorbestimmten Bremsabbruch-Fahrdaten die autonome Bremsung des Kraftwagens (10) zu beenden,
**dadurch gekennzeichnet, dass**
die elektrische Steuerung eingerichtet ist zum Durchführen eines Verfahrens mit den Schritten:
(i) Ermitteln, ob die Vorderfahrzeug-Erfassungsvorrichtung (14, 28) Signale abgibt und kein Vorderfahrzeug (16) erfasst und
(ii) verneinendenfalls Beenden der autonomen Bremsung, wenn die Fahrgeschwindigkeit (v_{F}) kleiner ist als die zuletzt ermittelte Vorderfahrzeuggeschwindigkeit (v_{Vf}).

2. Fahrerassistenzsystem nach Anspruch 1, **dadurch gekennzeichnet, dass** die elektrische Steuerung eingerichtet ist zum Durchführen eines Verfahrens mit den zusätzlichen Schritten:
- Ermitteln, ob die Vorderfahrzeug-Erfassungsvorrichtung (14, 28) Signale abgibt und
- verneinendenfalls Unterdrücken des Beendens der autonomen Bremsung, bis der Kraftwagen (10) steht.

3. Fahrerassistenzsystem nach einem der vorstehenden Ansprüche, **dadurch gekennzeichnet, dass** die Vorderfahrzeuggeschwindigkeits-Ermittlungs-vorrichtung (26) eingerichtet ist, um
- von der Fahrgeschwindigkeits-Erfassungsvorrichtung (18) Fahrgeschwindigkeitsdaten zu empfangen,
- von der Vorderfahrzeug-Erfassungsvorrichtung (14, 28) Abstandsdaten (A) zu empfangen und
- aus den Abstandsdaten (A) und den Fahrgeschwindigkeitsdaten (v_{F}) die Vorderfahrzeuggeschwindigkeit (v_{Vf}) zu errechnen.

4. Fahrerassistenzsystem nach einem der vorstehenden Ansprüche, **dadurch gekennzeichnet, dass** die Vorderfahrzeuggeschwindigkeits-Ermittlungs-vorrichtung (26) eingerichtet ist, um die die Vorderfahrzeuggeschwindigkeit (v_{Vf}) aus Radarsignalen eines Doppler-Radarsensors zu errechnen.

5. Fahrerassistenzsystem nach einem der vorstehenden Ansprüche, **gekennzeichnet durch** mindestens einen Fahrdatensensor (20, 22) zum Erfassen von einen Fahrzustand des Kraftwagens (10) charakterisierenden Fahrdaten.

6. Fahrerassistenzsystem nach Anspruch 5, **dadurch gekennzeichnet, dass** der mindestens eine Fahrdatensensor ein Gierratensensor (20) oder ein Verzögerungssensor (22) ist.

7. Fahrerassistenzsystem nach einem der vorstehenden Ansprüche, **dadurch gekennzeichnet, dass** die Vorderfahrzeug-Erfassungsvorrichtung (14, 28) einen mehrstrahligen Lasersensor (28) und/oder einen Radarsensor, insbesondere einen Doppler-Radarsensor, umfasst.

8. Fahrerassistenzsystem nach einem der vorstehenden Ansprüche, **dadurch gekennzeichnet, dass** die Vorderfahrzeug-Erfassungsvorrichtung (14, 28) eine Videokamera (14) umfasst.

9. Fahrerassistenzsystem nach einem der vorstehenden Ansprüche, **dadurch gekennzeichnet, dass** die elektrische Steuerung (24) eingerichtet ist zum kontinuierlichen Durchführen des Verfahrens.

10. Kraftwagen mit einem Fahrerassistenzsystem nach einem der vorstehenden Ansprüche.

## Claims

1. Driver assistance system for a motor vehicle having
(a) a speed detection device (18) for detecting driving data in the form of a speed (v_{F}) of the motor vehicle,
(b) a preceding vehicle detection device (14, 28) for detecting driving data in the form of a distance (A) from a preceding vehicle (16) driving in front of the motor vehicle (10),
(c) a preceding vehicle speed determination device (26) for determining a preceding vehicle speed (V_{Vf}) of the preceding vehicle (16), and
(d) an electric controller (24) which is configured
- to trigger autonomous braking of the motor vehicle (10) when predetermined brake triggering and driving data are present, and
- to end the autonomous braking of the motor vehicle (10) when predetermined braking abort driving data are present,
**characterized in that**
the electric controller is configured to carry out a method having the steps:
(i) determining whether the preceding vehicle detection device (14, 28) outputs signals and does not detect a preceding vehicle (16), and
(ii) if this is not the case, ending of the autonomous braking if the speed (v_{F}) is lower than the preceding vehicle speed (Vv_{f}) determined last.

2. Driver assistance system according to Claim 1, **characterized in that** the electric controller is configured to carry out a method having the additional steps:
- determining whether the preceding vehicle detection device (14, 28) outputs signals, and
- if this is not the case, suppression of the ending of the autonomous braking until the motor vehicle (10) is stationary.

3. Driver assistance system according to one of the preceding claims, **characterized in that** the preceding vehicle speed determination device (26) is configured
- to receive speed data from the speed detection device (18),
- to receive distance data (A) from the preceding vehicle detection device (14, 28), and
- to calculate the preceding vehicle speed (v_{vf}) from the distance data (A) and the speed data (v_{F}).

4. Driver assistance system according to one of the preceding claims, **characterized in that** the preceding vehicle speed determination device (26) is configured to calculate the preceding vehicle speed (V_{vf}) from radar signals of a Doppler radar sensor.

5. Driver assistance system according to one of the preceding claims, **characterized by** at least one driving data sensor (20, 22) for detecting driving data which characterize a driving state of the motor vehicle (10).

6. Driver assistance system according to Claim 5, **characterized in that** the at least one driving data sensor is a yaw rate sensor (20) or a delay sensor (22).

7. Driver assistance system according to one of the preceding claims, **characterized in that** the preceding vehicle detection device (14, 28) comprises a multibeam laser sensor (28) and/or a radar sensor, in particular a Doppler radar sensor.

8. Driver assistance system according to one of the preceding claims, **characterized in that** the preceding vehicle detection device (14, 28) comprises a video camera (14).

9. Driver assistance system according to one of the preceding claims, **characterized in that** the electric controller (24) is configured to carry out the method continuously.

10. Motor vehicle having a driver assistance system according to one of the preceding claims.

## Revendications

1. Système d'assistance au conducteur pour un véhicule automobile, comprenant
(a) un dispositif de détection de la vitesse de déplacement (18) pour détecter des données de déplacement sous la forme d'une vitesse de déplacement (v_{F}) du véhicule automobile,
(b) un dispositif de détection de véhicule à l'avant (14, 28) pour détecter des données de déplacement sous la forme d'une distance (A) par rapport à un véhicule à l'avant (16) qui se déplace devant le véhicule automobile (10),
(c) un dispositif de détermination de la vitesse du véhicule à l'avant (26) pour déterminer une vitesse du véhicule à l'avant (V_{vf}) du véhicule à l'avant (16) et
(d) une commande électrique (24) qui est conçue pour
- en présence de données de déplacement prédéfinies de déclenchement du freinage, déclencher un freinage autonome du véhicule automobile (10) et
- en présence de données de déplacement prédéfinies d'interruption du freinage, mettre fin au freinage autonome du véhicule automobile (10),
**caractérisé en ce que**
la commande électrique est conçue pour mettre en oeuvre un procédé comprenant les étapes suivantes :
(i) déterminer si le dispositif de détection de véhicule à l'avant (14, 28) délivre des signaux et ne détecte aucun véhicule à l'avant (16) et
(ii) à défaut, mettre fin au freinage autonome lorsque la vitesse de déplacement (v_{F}) est inférieure à la dernière vitesse du véhicule à l'avant (v_{vf}) déterminée.

2. Système d'assistance au conducteur selon la revendication 1, **caractérisé en ce que** la commande électrique est conçue pour mettre en oeuvre un procédé comprenant les étapes supplémentaires suivantes :
- déterminer si le dispositif de détection de véhicule à l'avant (14, 28) délivre des signaux et
- à défaut, inhiber l'arrêt du freinage autonome jusqu'à ce que le véhicule automobile (10) soit à l'arrêt.

3. Système d'assistance au conducteur selon l'une des revendications précédentes, **caractérisé en ce que** le dispositif de détermination de la vitesse du véhicule à l'avant (26) est conçu pour
- recevoir des données de vitesse de déplacement de la part du dispositif de détection de la vitesse de déplacement (18),
- recevoir des données de distance (A) de la part du dispositif de détection de véhicule à l'avant (14, 28) et
- calculer la vitesse du véhicule à l'avant (v_{vf}) à partir des données de distance (A) et des données de vitesse de déplacement (v_{F}).

4. Système d'assistance au conducteur selon l'une des revendications précédentes, **caractérisé en ce que** le dispositif de détermination de la vitesse du véhicule à l'avant (26) est conçu pour calculer la vitesse du véhicule à l'avant (v_{vf}) à partir des signaux radar d'un détecteur radar à effet Doppler.

5. Système d'assistance au conducteur selon l'une des revendications précédentes, **caractérisé par** au moins un détecteur de données de déplacement (20, 22) pour détecter des données de déplacement caractérisant un état de déplacement du véhicule automobile (10).

6. Système d'assistance au conducteur selon la revendication 5, **caractérisé en ce que** l'au moins un détecteur de données de déplacement est un détecteur de taux de lacet (20) ou un détecteur de ralentissement (22).

7. Système d'assistance au conducteur selon l'une des revendications précédentes, **caractérisé en ce que** le dispositif de détection de véhicule à l'avant (14, 28) comprend un détecteur à laser à plusieurs rayons (28) et/ou un détecteur radar, notamment un détecteur radar à effet Doppler.

8. Système d'assistance au conducteur selon l'une des revendications précédentes, **caractérisé en ce que** le dispositif de détection de véhicule à l'avant (14, 28) comprend une caméra vidéo (14).

9. Système d'assistance au conducteur selon l'une des revendications précédentes, **caractérisé en ce que** la commande électrique (24) est conçue pour mettre en oeuvre continuellement le procédé.

10. Véhicule automobile avec un système d'assistance au conducteur selon l'une des revendications précédentes.
